# EUROPEAN PATENT SPECIFICATION

(11) **EP 1 706 870 B1**
(45) Date of publication and mention of the grant of the patent: **20.06.2007**
(21) Application number: 05702607.2
(22) Date of filing: 07.01.2005
(51) Int. Cl.: G11B 11/105

(54) **METHOD AND APPARATUS FOR CONTROLLING A READOUT PARAMETER DURING READING**
VERFAHREN UND VORRICHTUNG ZUR STEUERUNG EINES AUSLESEPARAMETERS WÄHREND DES LESENS
PROCEDE ET APPAREIL DE COMMANDE DES PARAMETRES D'EXTRACTION PENDANT LA LECTURE

(30) Priority: 12.01.2004 EP 04100081
(43) Date of publication of application: 04.10.2006
(73) Proprietor: Koninklijke Philips Electronics N.V., 5621 BA Eindhoven (NL)
(72) Inventor: VERSCHUREN, Coen, A., NL-5656 AA Eindhoven (NL)
(74) Representative: Uittenbogaard, Frank
(86) International application number: PCT/IB2005/050085
(87) International publication number: WO 2005/069282

(56) References cited:
- WO-A-03/023767
- WO-A-03/069615
- WO-A-03/085660
- US-A1- 2002 145 956

## Description

The present invention relates to a method and to an apparatus for controlling at least one readout parameter, such as radiation power and/or field strength, during reading of a magneto-optical recording medium, such as a MAMMOS (Magnetic AMplifying Magneto-Optical System) disk, comprising a recording or storage layer and an expansion or readout layer.

In magneto-optical storage systems, the minimum width of the recorded marks is determined by the diffraction limit, i.e. by the Numerical Aperture (NA) of the focusing lens and the laser wavelength. A reduction of the width is generally based on shorter-wavelength lasers and higher-NA focusing optics. During magneto-optical recording, the minimum bit length can be reduced to below the optical diffraction limit by using Laser Pulsed Magnetic Field Modulation (LP-MFM). In LP-MFM, the bit transitions are determined by the switching of the field and the temperature gradient induced by the switching of the laser. Magnetic Super Resolution (MSR) or Domain Expansion (DomEx) methods have to be used for reading out the small crescent-shaped marks recorded in this way. These technologies are based on recording media with several magnetostatic or exchange-coupled RE-TM layers. According to MSR, a readout layer on a magneto-optical disk is arranged to mask adjacent bits during reading, while, according to domain expansion, a domain in the center of a spot is expanded. The advantage of the domain expansion technique over MSR is that bits with a length below the diffraction limit can be detected with a signal-to-noise ratio (SNR) similar to that of bits with a size comparable to the diffraction-limited spot. MAMMOS is a domain expansion method based on magneto-statically coupled storage and readout layers, wherein a magnetic field modulation is used for expansion and collapse of expanded domains in the readout layer.

In the above-mentioned domain expansion techniques, like MAMMOS, a written mark from the storage layer is copied to the readout layer upon laser heating with the help of an external magnetic field. The low coercitivity of this readout layer will cause the copied mark to expand so as to fill the optical spot and to be detected with a saturated signal level which is independent of the mark size. Reversal of the external magnetic field collapses the expanded domain. A space in the storage layer, on the other hand, will not be copied, and no expansion will occur.

The resolution of the MAMMOS readout process, i.e. the smallest bit size that can be reproduced without interference from neighboring bits, is limited by the spatial extent (copy window) of the copy process, which is determined by the overlap of the temperature-induced coercivity profile and the stray field profile of the bit pattern, which profile depends on the strength of the external magnetic field. The laser power that is used in the readout process should be high enough to enable copying. On the other hand, a higher laser power also increases the overlap due to the fact that the coercivity Hc decreases and the stray field increases with increasing temperature. When this overlap becomes too large, correct readout of a space is no longer possible because false signals are generated by neighboring marks. The difference between this maximum and the minimum laser power determines the power margin, which decreases strongly with decreasing bit length. Experiments have shown that with the current readout methods, bit lengths of 0.10 µm can be correctly detected, but at an extremely narrow power margin (i.e. 1 bit of a 16 bit DAC (Digital Analog Converter)). Hence, balancing of the optical power and the intensity of the external magnetic field is an important factor for determining optimum conditions.

However, even if optimum conditions have been set during an initial stage of a reading operation, the initial balance may be disturbed during reading due to environmental changes. These environmental changes may comprise field blurring, disk tilt, temperature changes, thickness non-uniformities of the protective coat of the disk, influences of the slider movement on the magnetic head, etc. Thus, controlling the optical power and the magnetic field strength during readout is essential.

JP-A-2000-215537 discloses a method and apparatus for controlling the optical power and/or the field strength of the external magnetic field by reading from a specific section on the disk an item of information defining a prescribed section on the disk and a pulse information defining a prescribed pulse number. Then, the number of pulses contained in the information read from the prescribed section is counted and compared with the pulse information. The optical power or the field strength is then adjusted on the basis of the comparison result.

Furthermore, WO03/023767A2 discloses a system for controlling radiation power and/or field strength during a reading operation from a magneto-optical recording medium. A pulse pattern in the reading signal is analyzed, and the analysis result is compared with a runlength characteristic of the data stored in the storage layer of the recording medium. The radiation power and/or the magnetic field strength are controlled in dependence on the comparison result. Much less or no disc capacity has to be reserved for power and/or field calibration as a result of this, since the user data can be used for this purpose.

Robust detection of runlength violations means e.g. that the smallest allowed mark runlength is not detected. Similarly, detection of a runlength greater than the maximum allowed length indicates a runlength violation. However, to detect the violation, i.e. the number of additional or missing peaks, with a reasonable reliability, the observed (random) data sequence has to be sufficiently large. This means that a lot of data errors are made before a suitable control signal is obtained that can be used to correct the readout conditions. Moreover, the discrete nature of the error signal makes it far from straightforward to design a robust control loop.

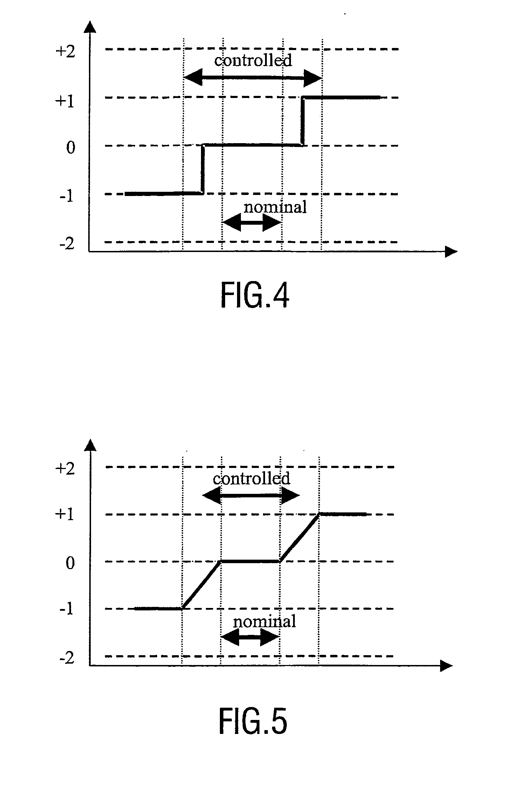

Fig. 4 is a diagram showing an error signal value vs. readout parameters, where the error signal is varied in a stepwise manner in dependence on the value of the readout parameter(s). As indicated in Fig. 4, this becomes even worse in case of a non-uniformity in the disk's optical or magnetic properties, for example. When a readout parameter is just outside the nominal range, a number of data errors is made while the error signal is still zero. For example, a +1 peak may occur which is, however, still below the decision threshold, so that no corrective action is taken. Only when the readout parameter deviates sufficiently, the number of errors is large enough to generate an error signal. Hence, the conventional discrete nature of the error signal has the drawback of coarse control and slow response with a considerable amount of readout errors.

It is an object of the present invention to provide a method and apparatus for providing an improved readout parameter control with increased robustness.

This object is achieved by a method as claimed in claims 1 and by an apparatus as claimed in claims 14.

Accordingly, due to the continuous functional relationship between the error signal and the relative occurrence of runlength violations, a smooth error signal can be generated and undesired discrete jumps of the error signal value can be prevented. In particular, the value of the error signal can be adapted to the relative amount of runlength violations. This means that an improved control and response can be achieved with a reduced number of readout errors.

The predetermined functional relationship may comprise a proportional relationship. This proportional relationship may be provided in a transition region between a non-controlled region and a controlled region. Readout errors which are mainly caused in the transition region(s) due to disk non-uniformities can be significantly reduced thereby.

The relative occurrence may be determined by calculating a running average of detected runlength violations. As an alternative, the determination may be based on a time-averaging or integration procedure. These alternative procedures provide simple solutions to the above problems associated with the discrete nature of the error signal.

The runlength violations may be determined by a pulse counting function or by a timer function.

The pulse pattern used for the analysis may correspond to the user data recorded on the recording medium, or alternatively, the pulse pattern may correspond to a predetermined data pattern with pre-defined mark and space runlength recorded at predetermined portions of the recording medium. The control may even be based on a combined evaluation or analysis of pre-defined or known data patterns and random user data. The pre-defined data patterns provide the advantage that runlength violations can be obtained directly by counting the detected number of peaks and subtracting the expected number. A small number of runlengths thus suffice for reliable detection. As an option, the error signal may be generated during reading of the predetermined portions and can be frozen or held constant during reading of other portions of the recording medium. The control based on the frozen error signal can be enhanced on the basis of runlength variations detected from user data recorded on the other portions of the recording medium.

As a specific example, the predetermined portion may be an address header portion.

The comparison may be performed on the basis of a look-up table linking the value of the error signal to a corresponding value of the relative occurrence of runlength violations.

Other advantageous further developments are defined in the dependent claims.

In the following, the present invention will be described on the basis of a preferred embodiment with reference to the accompanying drawings in which:
Fig. 1 shows a schematic diagram of a magneto-optical disk player, according to the preferred embodiment;
Fig. 2 shows signaling diagrams of a readout strategy with different degrees of overlap;
Fig. 3 shows a table for determining a range of spatial widths of a copy window based on a determined mark or space runlength;
Fig. 4 is a diagram showing an error signal vs. readout parameters for a prior art readout control with discrete nature of the error signal;
Fig. 5 is a diagram showing an error signal vs. readout parameters for an improved readout control with continuous nature of the error signal, according to the preferred embodiment; and
Fig. 6 is a flowchart of a control procedure according to the preferred embodiment.

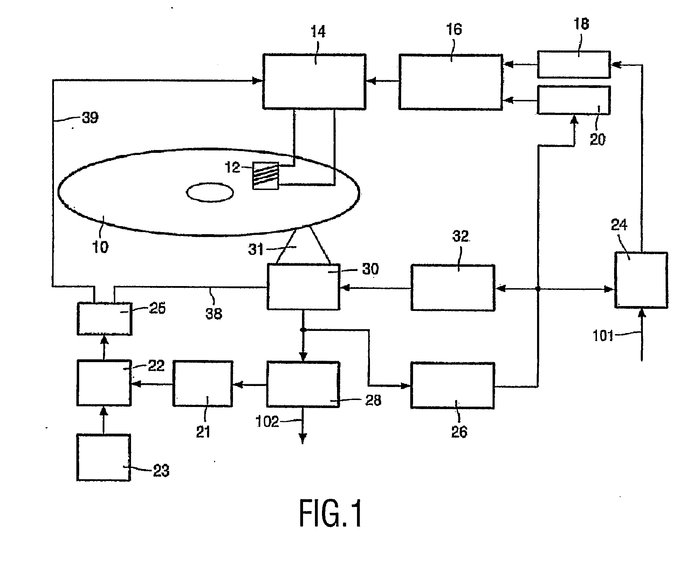

A preferred embodiment will now be described on the basis of a MAMMOS disk player as indicated in Fig. 1.

Fig. 1 schematically shows the construction of the disk player according to the preferred embodiment. The disk player comprises an optical pick-up unit 30 having a laser light radiating section for irradiation of a magneto-optical recording medium or record carrier 10, such as a magneto-optical disk, with light that has been converted, during recording, into pulses with a period synchronized with code data and a magnetic field applying section comprising a magnetic head 12 which applies a magnetic field to the magneto-optical disk 10 in a controlled manner during recording and playback. In the optical pick-up unit 30, a laser is connected to a laser driving circuit which receives recording and readout pulses from a recording/readout pulse adjusting unit 32 so as to control the pulse amplitude and timing of the laser of the optical pick-up unit 30 during a recording and readout operation. The recording/readout pulse adjusting circuit 32 receives a clock signal from a clock generator 26 which may comprise a PLL (Phase Locked Loop) circuit

It is noted that, for reasons of simplicity, the magnetic head 12 and the optical pickup unit 30 are shown on opposite sides of the disk 10 in Fig. 1. However, according to the preferred embodiment, they should be arranged on the same side of the disk 10.

The magnetic head 12 is connected to a head driver unit 14 and receives code-converted data via a phase adjusting circuit 18 from a modulator 24 during recording. The modulator 24 converts input recording data into a prescribed code.

During playback the head driver 14 receives a clock signal via a playback adjusting circuit 20 from the clock generator 26, which playback adjusting circuit 20 generates a synchronization signal for adjusting the timing and amplitude of pulses applied to the magnetic head 12. A recording/playback switch 16 is provided for switching or selecting the respective signal to be supplied to the head driver 14 during recording and during playback.

Furthermore, the optical pick-up unit 30 comprises a detector for detecting laser light reflected from the disk 10 and for generating a corresponding reading signal applied to a decoder 28 which is arranged to decode the reading signal so as to generate output data. Furthermore, the reading signal generated by the optical pick-up unit 30 is supplied to a clock generator 26 in which a clock signal obtained from embossed clock marks of the disk 10 is extracted and which supplies the clock signal for synchronization purposes to the recording pulse adjusting circuit 32, the playback adjusting circuit 20, and the modulator 24. In particular, a data channel clock may be generated in the PLL circuit of the clock generator 26.

In the case of data recording, the laser of the optical pick-up unit 30 is modulated with a fixed frequency corresponding to the period of the data channel clock, and the data recording area or spot of the rotating disk 10 is locally heated at equal distances. Additionally, the data channel clock output by the clock generator 26 controls the modulator 24 to generate a data signal with the standard clock period. The recording data are modulated and code-converted by the modulator 24 to obtain a binary runlength information corresponding to the information of the recording data.

The structure of the magneto-optical recording medium 10 may correspond to the structure described in JP-A-2000-260079.

The occurrence of false signals due to a large overlap (e.g. laser power too high) should normally be avoided. However, if the correct data in the storage layer is known, the occurrence and number of false peaks gives a direct information on the spatial width of the copy window, which is directly related to the thermal laser profile. This information can not only be used to correct the previous and/or following data on the disc, but also provides a direct way to correct readout parameters, such as the laser power and/or the field strength of the external magnetic field.

In the embodiment shown in Fig. 1, the laser power and/or the strength of the external magnetic field are controlled as examples of possible readout parameters. However, other suitable readout parameters influencing the copy window size or phase may be equally well controlled. A control unit 25 is provided for supplying first and second control or error signals 38, 39 to the head driver 14 and/or to the optical pickup unit 30. The first control signal 38 is supplied to the optical pickup unit 30 and can be used for adjusting the driving current of a laser diode or another radiation source, so as to adjust the optical radiation or laser power used for heating the disk 10. The second error signal 39 is supplied to the head driver and can be used to adjust the field current of a coil arrangement provided at the magnetic head, so as to adjust the field strength or intensity of the external magnetic field. The two error signals 38, 39 may be provided as alternative or combined error signals. In the latter case, the second error signal 39 supplied to the head driver 14 may be used for fine adjustment of the balance between the optical power and the field strength, while the first error signal 39 supplied to the optical pickup unit 30 may be used for rough adjustment. This is because a change in the optical power influences both the stray field and the coercivity profile, whereas a change in the external magnetic field only influences the total stray field.

The control unit 25 receives a comparison result of a comparing unit 22 which compares the result of an analysis of the readout data obtained from the decoder 28 with reference data stored in a non-volatile memory, e.g. look-up Table 23. The analysis is performed by an analysis unit 21 which receives the readout data from the decoder 28.

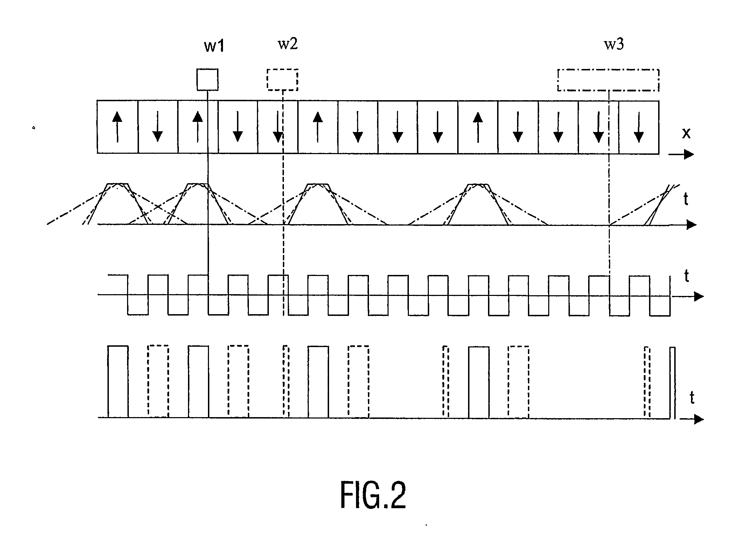

Fig. 2 shows signaling diagrams for an example of a disc with a range of space (downward magnetization (indicated by a corresponding arrow)) runlengths (I1, I2, I3, I4), separated by I1 marks (upward magnetization), as indicated in the upper line which shows a spatial arrangement of magnetized regions on a track of the disk 10. The expression "In" denotes a space runlength with a duration corresponding to n channel bits (minimum space or mark regions), while the expression "In" denotes a mark runlength with a duration corresponding to n channel bits. The resulting time dependency of the overlaps (second line from above) upon scanning with different copy window sizes w1, w2 and w3 are also indicated, as well as the MAMMOS signals or peaks (fourth line) generated with the external magnetic field (third line). For conventional, correct readout, the copy window should be smaller than half the channel bit length b (as applies for the copy window size w1 in Fig. 2). In this case, each mark channel will yield one MAMMOS peak, and no peaks are generated for space channels. Thus, detection of *m* consecutive peaks indicates an I*m* mark runlength, whereas *s* missing peaks indicate an I*s* space runlength. This situation is indicated by the solid line in Fig. 2. For larger window sizes, e.g. w2, MAMMOS peaks will also be generated for space regions near a mark region because of the larger overlap (dashed line in Fig. 2). For example, an I1 mark will now yield three peaks instead of one. Obviously, I1 and I2 spaces can no longer be detected now. An I3 space will show one missing peak (instead of three). Even larger window sizes (2.5b < w < 4.5b), e.g. w3, cause a difference of four peaks in space and mark runlength detection, while a I5 space is the smallest space runlength that can be detected (by one missing peak).

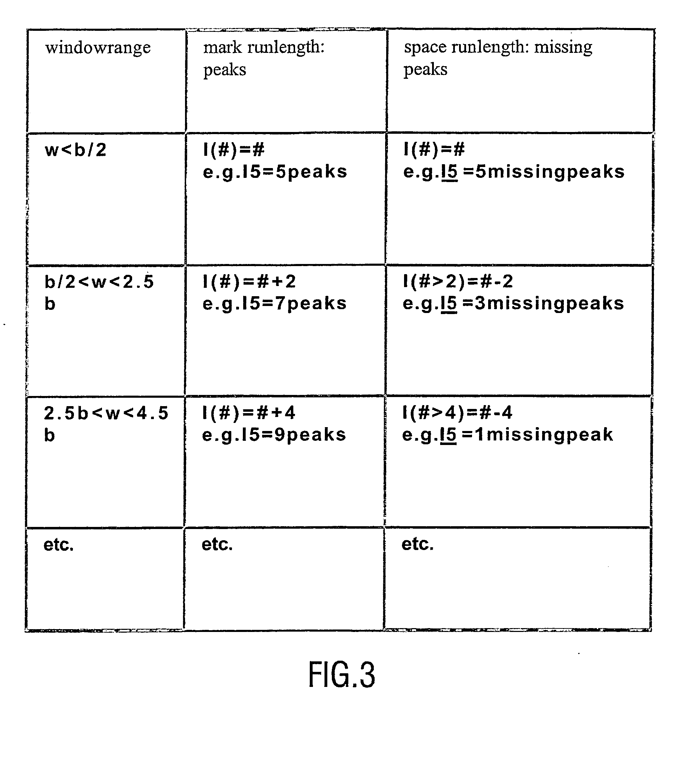

Fig. 3 shows a Table summarizing the effects of different copy window sizes on the number of peaks or missing peaks that can be detected at predetermined runlengths. If the window size is smaller than half the channel bit length b, the number of detected peaks and missing peaks of the readout data corresponds to the runlength of the recorded information. If the copy window size is in the range between b/2 and 2.5b, the number of detected peaks equals the recorded mark runlength plus two peaks, and the number of missing peaks equals the recorded space runlength minus two peaks (provided that the runlength is three or more). Moreover, if the copy window size is in the range between 2.5b and 4.5b, the number of detected peaks equals the recorded mark runlength plus four peaks, and the number of missing peaks equals the recorded space runlength minus four peaks, and so on.

With the help of a Table like this, which may differ for different read and write strategies, but can be derived very easily (similar to the construction of Fig. 2), the copy window can be measured at the comparing unit 22, whereupon the field strength and/or the optical power is controlled using the above error signals 38, 39 generated by the control unit 25. Since the copy window increases with increasing laser power (as well as ambient temperature and external magnetic field), it is possible to perform the power and/or field control during readout e.g. by detection of runlength violations in the written data and/or by using a test area with pre-defined data patterns consisting of known mark and space runlengths. The first option is especially attractive since much less or no disc capacity has to be reserved for power calibration, as the user data is used for this purpose. Moreover, when the window has been measured, (most of) the previous data stream of (missing) peaks can be translated into correct runlength data, again using the Table information of Fig. 3, which may be stored in the look-up Table 23. In this way, the effects of environmental changes, e.g. changes in the ambient temperature, the external field strength (coil to disc distance), and even mild variations in the disc properties can be corrected on the fly.

The runlength violations are determined by the analyzing unit 21 e.g. on the basis of determination of the peak numbers in the readout signal by a pulse counting function or on the basis of a measurement of the space periods in the readout signal by a timer function.

Assuming a (0,6) modulation, the smallest marks and spaces are I1 and I1, while the largest marks and space regions are I7 and I7, respectively. Thus, if the smallest mark runlength in a data sequence observed by the analysis unit 21 is greater than 1 (e.g. 3 consecutive peaks), the comparing unit 22 determines a correction of 2 peaks (for all previous data) and thus a window size between b/2 and 2.5b. If the greatest observed space runlength (I7) shows, for example, only 3 missing peaks instead of 7, the comparison unit 22 determines a correction of 4 peaks and a window size between 2.5b and 4.5b. It is noted that with such a large window, only I5 and greater space runlengths can be detected and corrected, again demonstrating the need for rather tight laser power control. In both cases, the optical power and/or the field strength should be reduced by a corresponding amount, which is determined at the control unit 25 on the basis of the comparison results. The runlength characteristic of the modulation may be preset in the analyzing unit 21 or the look-up Table 23 in dependence on information provided on the disk 10 or input by an input function of the disk player.

For even better control of the required laser power, a look-up Table or a number of algorithm parameters may be pre-recorded on the disc 10 in a prescribed section. The look-up Table may store a pre-determined window vs. laser power data characteristic of the disk 10, which may be read and used by the control unit 25 to generate the control signals. For greater linear velocities (e.g. CAV operation or different readout speeds), the laser power should be increased to reach the same temperature. Thus, the Table could either include the disk radius as a variable or an interpolation scheme between e.g. inner and outer radius.

A simple solution for the problem described above resulting from the discrete nature of the error signal(s) and the non-uniformity problem is to make the first and/or second error signal 38, 39 proportional to the relative occurrence of the detected number of additional or missing peaks.

Fig. 5 is a diagram showing the first and/or second error signals 38, 39 (vertical axis) vs. the readout parameters, e.g. radiation power and/or field strength (horizontal axis), for an improved readout control with a continuous nature of the error signal, according to the preferred embodiment of the present invention. In Fig. 5, respective arrows indicate a range of nominal readout parameters, where the first and/or second error signals 38, 39 are zero, and a range of controlled readout parameters. The controlled range comprises continuous regions where the error signal is varied continuously in dependence on the readout parameters. The shaded areas, where the error signal is varied continuously, represent transition regions caused by disk non-uniformity.

Such a continuously varying error signal may be obtained e.g. by calculating, e.g. in the control unit 25, the running average of the violations detected by the comparing unit 22, or by a time-averaging or integrating operation. For example, a violation of +1 peak during 25% of the time (and nominal during the remaining 75%) would yield an error of +0.25, -1 peak for 50% of the time would yield an error of-0.50, etc. Such a solution, however, would still need to integrate over large data sequences if a reliable and stable error signal is to be obtained. Any other functional relationship between the error signal value and the determined relative occurrence may be used and may be stored in the control unit 25 or in the look-up Table 23 or any other look-up Table or memory.

A further improvement or optional modification, therefore, is to combine the above improved control with small test areas, e.g. those mentioned above or additional ones, provided on the disk e.g. at regular intervals with a known data pattern, e.g., an I1I1 or an I3I3 carrier or an I1I3I3I1 pattern. The number of additional peaks is directly obtained from such a known pattern by counting of the detected number of peaks and subtracting the expected number. Since a small number of runlengths are already sufficient for reliable detection in this case, many such areas can be provided while keeping the capacity overhead very small. This will lead to a faster, more accurate control and therefore to a reduced number of readout errors. In a practical implementation, the error signals, i.e. first and/or second error signals 38, 39, obtained from these test areas, which may be provided e.g. in an address header portion, may be used exclusively in the control loop provided for controlling the readout parameter(s), e.g. radiation power and/or field strength of the external magnetic field.

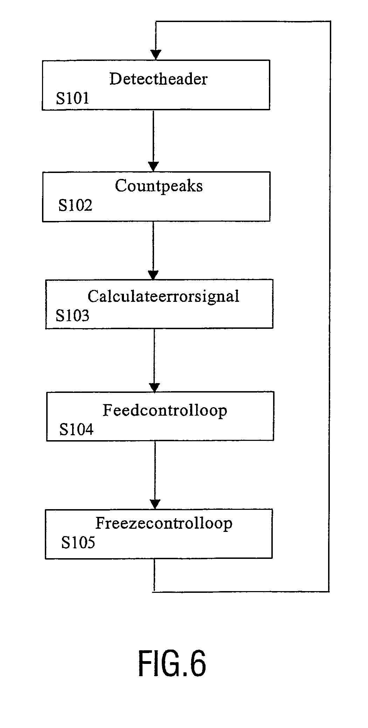

Fig. 6 is a flowchart of a control procedure according to the preferred embodiment. In step S101, the test area (header portion) is detected, e.g. by the analyzing unit 21. Then, in step S102, peaks detected in the readout data are counted by the analyzing unit 21. In step S103, the control unit 25 calculates the first and/or second error signals 38, 39 from output information obtained from the comparing unit 22 and feeds these first and/or second error signals 38, 39 to the respective control loops. Then the control loop, i.e. the value of the first and/or second error signals 38, 39, is frozen or maintained until the next test area is detected after the procedure has jumped back to the initial step S 101. As an additional measure or improvement, the runlength violation results determined by the comparing unit 22 from the user data between the test areas may be used to support or enhance the error or control signals.

It is noted that the present invention may be applied to any reading system for domain expansion in magneto-optical disk storage systems. The functions of the analyzing unit 21, the comparing unit 22, the look-up Table 23, and the control unit 25 may be provided in a single unit which may be a hardware unit or a processor unit controlled by a corresponding control program. The readout data may be supplied directly from the optical pickup unit 30 to the analyzing unit 21. The preferred embodiments may thus vary within the scope of the attached claims.

## Claims

1. A method of controlling at least one readout parameter during a reading operation from a magneto-optical recording medium (10) comprising a storage layer and a readout layer, wherein an expanded domain leading to a pulse in a reading signal is generated in said readout layer by copying of a mark region from said storage layer to said readout layer upon heating by a radiation beam having a radiation power, said method comprising the steps of:
a) analyzing a pulse pattern in said reading signal;
b) comparing the result of said analyzing step with a runlength characteristic of the data stored in said storage layer;
c) determining a relative occurrence of runlength violations obtained from said comparing step;
d) generating an error signal having a predetermined continuous functional relationship with said determined relative occurrence; and
e) controlling said at least one readout parameter on the basis of said error signal.

2. A method according to claim 1, wherein said at least one readout parameter comprises at least either said radiation power or a strength of an external magnetic field applied during said reading operation, or both.

3. A method according to claim 1 or 2, wherein said predetermined functional relationship comprises a proportional relationship.

4. A method according to claim 3, wherein said proportional relationship is provided in a transition region between a non-controlled region and a controlled region.

5. A method according to claim 1 or 2, wherein said determination step comprises a calculation of a running average of detected runlength violations.

6. A method according to claim 1 or 2, wherein said determination step comprises a time-averaging or integration step.

7. A method according to claim 1, 2, 5 or 6, wherein said runlength violations are determined by a pulse counting function or by a timer function.

8. A method according to claim 1 or 2, wherein said pulse pattern corresponds to the user data recorded on said recording medium (10).

9. A method according to claim 1 or 2, wherein said pulse pattern corresponds to a predetermined data pattern with pre-defined mark and space runlengths recorded on predetermined portions of said recording medium (10).

10. A method according to claim 9, wherein said generating step comprises a generation of said error signal during reading of said predetermined portions, and a freezing of said generated error signal during reading of other portions of said recording medium (10).

11. A method according to claim 10, wherein a control based on said freezed error signal is enhanced on the basis of runlength variations detected from user data recorded on said other portions of said recording medium (10).

12. A method according to claim 9, 10 or 11, wherein said predetermined portion is an address header portion.

13. A method according to claim 1 or 2, wherein said comparing step is performed on the basis of a look-up Table linking the value of said error signal to a corresponding value of said relative occurrence of runlength violations.

14. A reading apparatus for controlling at least one readout parameter during a reading operation from a magneto-optical recording medium (10) comprising a storage layer and a readout layer, wherein an expanded domain leading to a pulse in a reading signal is generated in said readout layer by copying of a mark region from said storage layer to said readout layer upon heating by radiation power, said apparatus comprising:
a) analyzing means (21) for analyzing a pulse pattern in said reading signal;
b) comparing means (22) for comparing the result of the analysis by said analyzing means (21) with a runlength characteristic of the data stored in said storage layer, determining a relative occurrence of runlength violations obtained from said comparing step, and generating an error signal having a predetermined continuous functional relationship with said determined relative occurrence; and
c) control means (25) for receiving said error signal and for controlling said at least one readout parameter on the basis of said error signal.

15. A reading apparatus according to claim 14, wherein said at least one readout parameter comprises at least either said radiation power or the strength of an external magnetic field applied during said reading operation, or both.

16. A reading apparatus according to claim 14 or 15, further comprising storing means (23) for storing information defining a relationship between a value of said error signal and a value of said relative occurrence.

17. An apparatus according to claim 14, 15 or 16, wherein said reading apparatus is a disk player for reading MAMMOS disks.

## Patentansprüche

1. Verfahren zur Steuerung mindestens eines Ausleseparameters während eines Lesevorgangs von einem magnetooptischen Aufzeichnungsmedium (10), das eine Speicherschicht und eine Ausleseschicht umfasst, wobei eine expandierte Domäne, die zu einem Impuls in einem Lesesignal führt, beim Erwärmen mittels eines Strahls, der eine Strahlungsleistung aufweist, durch Kopieren eines Markierungsbereiches von der Speicherschicht zu der Ausleseschicht in der Ausleseschicht erzeugt wird, wobei das Verfahren die folgenden Schritte umfasst:
a) Analysieren eines Impulsmusters in dem Lesesignal;
b) Vergleichen des Ergebnisses des Schrittes des Analysierens mit einer Lauflängencharakteristik der Daten, die in der Speicherschicht gespeichert sind;
c) Bestimmen einer relativen Häufigkeit von Verletzungen der Lauflänge, die aus dem Schritt des Vergleichens erhalten wurden;
d) Erzeugen eines Fehlersignals, das eine vorgegebene stetige funktionale Beziehung zu der bestimmten relativen Häufigkeit aufweist; und
e) Steuern des mindestens einen Ausleseparameters auf der Basis des Fehlersignals.

2. Verfahren nach Anspruch 1, wobei der mindestens eine Ausleseparameter wenigstens entweder die Strahlungsleistung oder eine Stärke eines äußeren Magnetfeldes, das während des Lesevorgangs angelegt wird, oder beides umfasst.

3. Verfahren nach Anspruch 1 oder 2, wobei die vorgegebene funktionale Beziehung eine proportionale Beziehung umfasst.

4. Verfahren nach Anspruch 3, wobei die proportionale Beziehung in einem Übergangsbereich zwischen einem nicht gesteuerten Bereich und einem gesteuerten Bereich vorgesehen ist.

5. Verfahren nach Anspruch 1 oder 2, wobei der Schritt des Bestimmens eine Berechnung eines gleitenden Mittels erkannter Verletzungen der Lauflänge umfasst.

6. Verfahren nach Anspruch 1 oder 2, wobei der Schritt des Bestimmens einen Schritt der zeitlichen Mittelung oder Integration umfasst.

7. Verfahren nach Anspruch 1, 2, 5 oder 6, wobei die Verletzungen der Lauflänge durch eine Impulszählfunktion oder durch eine Timerfunktion bestimmt werden.

8. Verfahren nach Anspruch 1 oder 2, wobei das Impulsmuster den Benutzerdaten entspricht, die auf dem Aufzeichnungsmedium (10) aufgezeichnet sind.

9. Verfahren nach Anspruch 1 oder 2, wobei das Impulsmuster einem vorgegebenen Datenmuster mit vordefinierten Markierungs- und Zwischenraum-Lauflängen entspricht, das an vorgegebenen Abschnitten des Aufzeichnungsmediums (10) aufgezeichnet ist.

10. Verfahren nach Anspruch 9, wobei der Schritt des Erzeugens eine Erzeugung des Fehlersignals während des Lesens der vorgegebenen Abschnitte und ein Einfrieren des erzeugten Fehlersignals während des Lesens anderer Abschnitte des Aufzeichnungsmediums (10) umfasst.

11. Verfahren nach Anspruch 10, wobei eine auf dem eingefrorenen Fehlersignal beruhende Steuerung anhand von Änderungen der Lauflänge verbessert wird, die aus Benutzerdaten erkannt werden, die auf den anderen Abschnitten des Aufzeichnungsmediums (10) aufgezeichnet sind.

12. Verfahren nach Anspruch 9, 10 oder 11, wobei der vorgegebene Abschnitt ein Adresskopf-Abschnitt ist.

13. Verfahren nach Anspruch 1 oder 2, wobei der Schritt des Vergleichens anhand einer Nachschlagtabelle ausgerührt ist, die den Wert des Fehlersignals mit einem entsprechenden Wert der relativen Häufigkeit von Verletzungen der Lauflänge verknüpft.

14. Lesegerät zur Steuerung mindestens eines Ausleseparameters während eines Lesevorgangs von einem magnetooptischen Aufzeichnungsmedium (10), das eine Speicherschicht und eine Ausleseschicht umfasst, wobei eine expandierte Domäne, die zu einem Impuls in einem Lesesignal führt, beim einem Erwärmen mittels Strahlungsleistung durch Kopieren eines Markierungsbereiches von der Speicherschicht zu der Ausleseschicht in der Ausleseschicht erzeugt wird, wobei das Gerät umfasst:
a) Analysemittel (21) zum Analysieren eines Impulsmusters in dem Lesesignal;
b) Vergleichsmittel (22) zum Vergleichen des Ergebnisses der Analyse durch das Analysemittel (21) mit einer Lauflängencharakteristik der Daten, die in der Speicherschicht gespeichert sind, Bestimmen einer relativen Häufigkeit von Verletzungen der Lauflänge, die aus dem Schritt des Vergleichens erhalten wurden, und Erzeugen eines Fehlersignals, das eine vorgegebene stetige funktionale Beziehung zu der bestimmten relativen Häufigkeit aufweist; und
c) Steuerungsmittel (25) zum Empfangen des Fehlersignals und zum Steuern des mindestens einen Ausleseparameters auf der Basis des Fehlersignals.

15. Lesegerät nach Anspruch 14, wobei der mindestens eine Ausleseparameter wenigstens entweder die Strahlungsleistung oder eine Stärke eines äußeren Magnetfeldes, das während des Lesevorgangs angelegt wird, oder beides umfasst.

16. Lesegerät nach Anspruch 14 oder 15, welches ferner Speichermittel (23) zum Speichern von Informationen umfasst, die eine Beziehung zwischen einem Wert des Fehlersignals und einem Wert der relativen Häufigkeit definieren.

17. Gerät nach Anspruch 14, 15 oder 16, wobei das Lesegerät ein Disk-Player zum Lesen von MAMMOS Speicherplatten ist.

## Revendications

1. Procédé pour commander au moins un paramètre de lecture durant une opération de lecture à partir d'un support d'enregistrement magnéto-optique (10) comprenant une couche de stockage et une couche de lecture, dans lequel un domaine étendu, conduisant à une impulsion dans un signal de lecture, est généré dans ladite couche de lecture par copie d'une région de marque de ladite couche de stockage vers ladite couche de lecture lors du chauffage par un faisceau de rayonnement ayant une puissance de rayonnement, ledit procédé comprenant les étapes :
a) d'analyse d'un motif d'impulsion dans ledit signal de lecture ;
b) de comparaison du résultat de ladite étape d'analyse avec une caractéristique de longueur de plage de données stockées dans ladite couche de stockage ;
c) de détermination de l'occurrence relative de violations de longueur de plage obtenue à partir de ladite étape de comparaison ;
d) de génération d'un signal d'erreur ayant une relation fonctionnelle continue prédéterminée avec ladite occurrence relative déterminée ; et
e) de commande dudit au moins un paramètre de lecture sur base dudit signal d'erreur.

2. Procédé selon la revendication 1, dans lequel ledit au moins un paramètre de lecture comprend au moins soit ladite puissance de rayonnement, soit une intensité d'un champ magnétique extérieur appliqué durant ladite opération de lecture, soit les deux.

3. Procédé selon la revendication 1 ou 2, dans lequel ladite relation fonctionnelle prédéterminée comprend une relation proportionnelle.

4. Procédé selon la revendication 3, dans lequel ladite relation proportionnelle est prévue dans une région de transition entre une région non commandée et une région commandée.

5. Procédé selon la revendication 1 ou 2, dans lequel ladite étape de détermination comprend un calcul d'une moyenne mobile des violations de longueur de plage détectées.

6. Procédé selon la revendication 1 ou 2, dans lequel ladite étape de détermination comprend une étape de prise de moyenne temporelle ou d'intégration.

7. Procédé selon la revendication 1, 2, 5 ou 6, dans lequel lesdites violations de longueur de plage sont déterminées par une fonction de comptage d'impulsion ou par une fonction de minuterie.

8. Procédé selon la revendication 1 ou 2, dans lequel ledit motif d'impulsion correspond aux données de l'utilisateur enregistrées sur ledit support d'enregistrement (10).

9. Procédé selon la revendication 1 ou 2, dans lequel ledit motif d'impulsion correspond à un motif prédéterminé de données avec des longueurs de plage prédéfinies de marque et d'espace enregistrées sur des portions prédéterminées dudit support d'enregistrement (10).

10. Procédé selon la revendication 9, dans lequel ladite étape de génération comprend une génération dudit signal d'erreur durant la lecture desdites portions prédéterminées, et le figement dudit signal d'erreur généré durant la lecture d'autres portions dudit support d'enregistrement (10).

11. Procédé selon la revendication 10, dans lequel une commande basée sur ledit signal d'erreur figé est améliorée sur base des variations de longueur de plage détectées à partir des données de l'utilisateur sur lesdites autres portions dudit support d'enregistrement (10).

12. Procédé selon la revendication 9, 10 ou 11, dans lequel ladite portion prédéterminée est une portion d'en-tête d'adresse.

13. Procédé selon la revendication 1 ou 2, dans lequel ladite étape de comparaison est exécutée sur la base de la table de correspondance liant la valeur dudit signal d'erreur à une valeur correspondante de ladite occurrence relative des violations de longueur de plage.

14. Appareil de lecture pour commander au moins un paramètre de lecture durant une opération de lecture à partir d'un support d'enregistrement magnéto-optique (10) comprenant une couche de stockage et une couche de lecture, dans lequel un domaine étendu, conduisant à une impulsion dans un signal de lecture, est généré dans ladite couche de lecture par copie d'une région de marque de ladite couche de stockage vers ladite couche de lecture lors du chauffage par puissance de rayonnement, ledit appareil comprenant :
a) des moyens d'analyse (21) pour analyser un motif d'impulsion dans ledit signal de lecture ;
b) des moyens de comparaison (22) pour comparer le résultat de l'analyse par lesdits moyens d'analyse (21) avec la caractéristique de longueur de plage des données stockées dans ladite couche de stockage, déterminant l'occurrence relative de violations de longueur de plage obtenues à partir l'étape de comparaison, et générant un signal d'erreur ayant une relation fonctionnelle continue prédéterminée avec ladite occurrence relative déterminée ; et
c) des moyens de commande (25) pour recevoir ledit signal d'erreur et pour commander ledit au moins un paramètre de lecture sur base dudit signal d'erreur.

15. Appareil de lecture selon la revendication 14, dans lequel ledit au moins un paramètre de lecture comprend au moins, soit ladite puissance de rayonnement, soit l'intensité d'un champ magnétique extérieur appliqué durant ladite opération de lecture, soit les deux.

16. Appareil de lecture selon la revendication 14 ou 15, comprenant en plus des moyens de stockage (23) pour stocker des informations définissant une relation entre une valeur dudit signal d'erreur et ladite occurrence relative.

17. Appareil selon la revendication 14, 15 ou 16, dans lequel ledit appareil de lecture est un lecteur de disques pour lire des disques MAMMOS.
